# EUROPEAN PATENT APPLICATION

(11) **EP 1 998 562 A2**
(43) Date of publication of application: **03.12.2008**
(21) Application number: 08004656.8
(22) Date of filing: 13.03.2008
(51) Int. Cl.: H04N 5/44

(54) **Digital video apparatus and method for controlling digital video apparatus**

(30) Priority: 31.05.2007 JP 2007146318
(71) Applicant: KABUSHIKI KAISHA TOSHIBA, Tokyo (JP)
(72) Inventor: Shioya, Atsuyoshi, Tokyo (JP)
(74) Representative: HOFFMANN EITLE

(57) **Abstract**

A digital video apparatus includes: a first standby information storing unit that stores first standby command disregarding information; an active source storing unit that stores active source information indicating whether unique information of one of external devices from which a video is currently received is set as an active source; a second standby information storing unit that stores second standby command disregarding information; a first determination unit; a second determination unit; a third determination unit; and a control unit that controls operational functions of the digital video apparatus to transition into a standby state when (1) determined that the received standby command is received from the active source, or (2) determined to disregard the received standby command should be disregarded by the third determination unit.

## Description

### CROSS-REFERENCE TO RELATED APPLICATIONS

This application is based upon and claims the benefit of priority from Japanese Patent Application No. 2007-146318, filed on May 31, 2007, the entire contents of which are incorporated herein by reference.

### BACKGROUND

### 1. Field

One embodiment of the invention relates to a digital video apparatus and a method for controlling the digital video apparatus.

### 2. Description of the Related Art

Conventionally, there is proposed a digital video apparatus in which an operation status thereof is controlled in response to a status control command received from an external device via an HDMI terminal. An example of such apparatus is disclosed in JP-A-2005-184079.

In the conventional digital video apparatus, start and stop of playing/recording operation for video source is controlled by a control command received from the external device through the HDMI terminal.

There is known a type of the external devices connected to the digital video apparatus, which transmits a standby command to the digital video apparatus when a power supply is turned off in the external devices, the standby command requesting the digital video apparatus to set operational functions into a standby state.

When the standby command is received, the following problem arises in the digital video apparatus.

For example, in a situation that a first external device transmitting a first video source being currently viewed by a user and a second external device transmitting a second video source being not viewed are both connected to the digital video apparatus via the HDMI terminal, the operational functions in the digital video apparatus are set into the standby state by the standby command output from the second external device. Accordingly, video display by the digital video apparatus may be automatically interrupted.

### SUMMARY

One of objects of the present invention is to provide an digital video apparatus and a method for controlling the digital video apparatus that are capable of preventing a situation that the digital video apparatus is brought automatically into a standby state by a standby command output from one of external devices that are connected to the digital video apparatus.

According to a first aspect of the present invention, there is provided a digital video apparatus including: a plurality of HDMI terminals to which at least one of external devices is connected; a first standby information storing unit that stores first standby command disregarding information indicating whether to disregard every standby commands input through the HDMI terminals; an active source storing unit that stores active source information indicating whether unique information of one of the external devices from which a video is currently received is set as an active source; a second standby information storing unit that stores second standby command disregarding information indicating whether to disregard a standby command received from any of the external devices that are not set as the active source; a first determination unit that determines, when a received standby command is received from one of the external devices through the HDMI terminals, whether to disregard every standby commands by referring to the first standby command disregarding information; a second determination unit that determines, when not determined that every standby commands should be disregarded by the first determination unit, whether the received standby command is received from the active source by determining whether a received unique information, which is included in the received standby command, is set as the active source by referring to the active source information; a third determination unit that determines, when not determined that the received standby command is received from the active source, whether to disregard the received standby command by determining whether to disregard the received standby command by referring to the second standby command disregarding information; and a control unit that controls operational functions of the digital video apparatus to transition into a standby state when (1) determined that the received standby command is received from the active source, or (2) determined to disregard the received standby command should be disregarded by the third determination unit.

According to a second aspect of the present invention, there is provided a method for controlling a digital video apparatus that is provided with a plurality of HDMI terminals to which at least one of external devices is connected, the method including: storing first standby command disregarding information that indicates whether to disregard every standby commands input through the HDMI terminals; storing active source information that indicates whether unique information of one of the external devices from which a video is currently received is set as an active source; storing unit second standby command disregarding information that indicates whether to disregard a standby command received from any of the external devices that are not set as the active source; determining, when a received standby command is received from one of the external devices through the HDMI terminals, whether to disregard every standby commands by referring to the first standby command disregarding information; determining, when not determined that every standby commands should be disregarded by the first determination unit, whether the received standby command is received from the active source by determining whether a received unique information, which is included in the received standby command, is set as the active source by referring to the active source information; determining, when not determined that the received standby command is received from the active source, whether to disregard the received standby command by determining whether to disregard the received standby command by referring to the second standby command disregarding information; and controlling operational functions of the digital video apparatus to transition into a standby state when (1) determined that the received standby command is received from the active source, or (2) determined to disregard the received standby command should be disregarded by the third determination unit.

### BRIEF DESCRIPTION OF THE SEVERAL VIEWS OF THE DRAWINGS

A general configuration that implements the various feature of the invention will now be described with reference to the drawings.

The drawings and the associated descriptions are provided to illustrate embodiments of the invention and not to limit the scope of the invention.

Fig. 1 is a block diagram showing a configuration of an AV network system.

Fig. 2 is a view showing an operation setting table stored in a memory.

Fig. 3 is a view showing an example of an operation setting screen displayed on a display unit.

Fig. 4 is a flowchart showing an operation of a TV receiver set.

### DETAILED DESCRIPTION

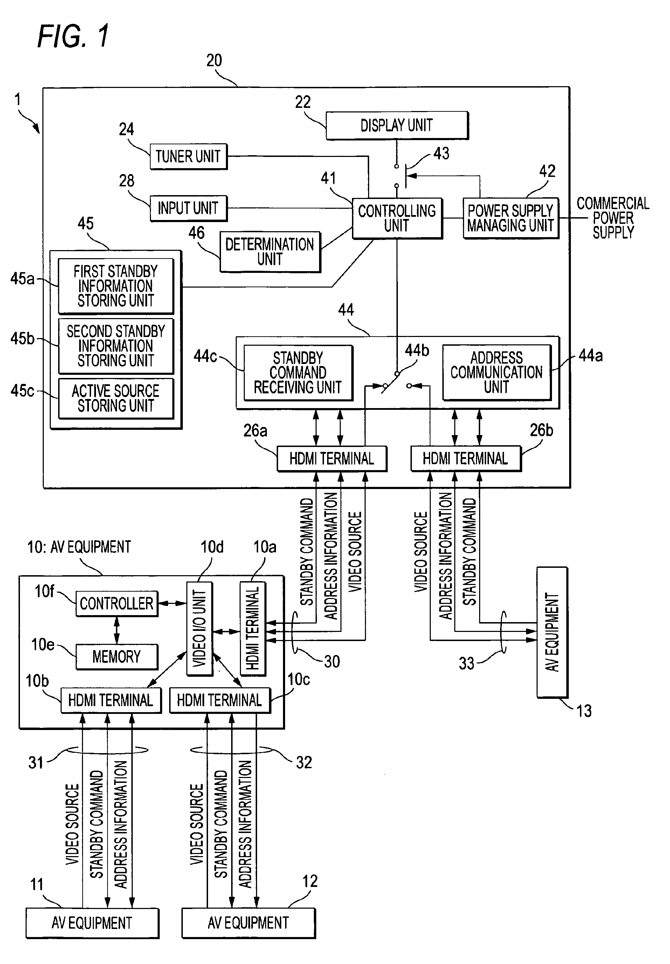

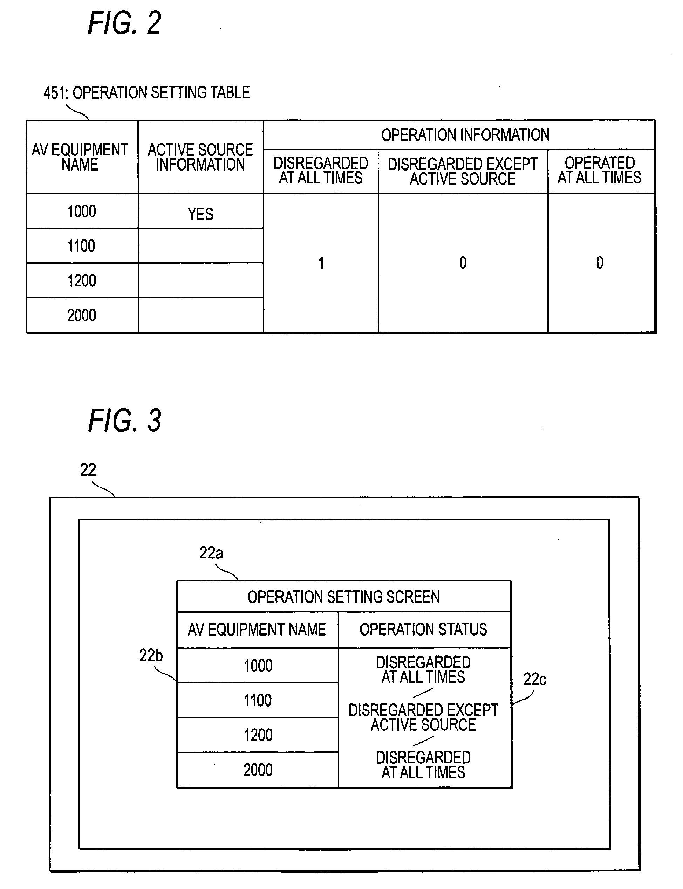

An embodiment according to the present invention will be explained in detail with reference to the accompanying drawings. FIG.1 is a block diagram showing a configuration of an AV network system 1 according to the embodiment. FIG.2 is a view showing a table set in a TV receiver set 20 of an AV network system shown in FIG.1

As shown in FIG.1, the network system 1 according to the embodiment includes a TV receiver set 20, AV equipments (Audio/Video equipments) connected to the TV receiver set 20 as external devices via an HDMI (High-Definition Multimedia Interface) cables 30, 31, 32, 33.

Each of the AV equipments may be any one of an AV amplifier 10, a DVD player 11, a Set Top Box 12 (referred to as a "STB 12" hereinafter), a HDD video recording device 13, and the like. In FIG.1, the AV equipments are shown as AV equipments 10, 11, 12, 13 respectively.

The TV receiver set 20 is provided with a composite terminal and a component terminal (not shown). Accordingly, in addition to the AV amplifier 10, the DVD player 11, the STB 12, and the HDD video recording device 13, for example, the home game device can be connected to the composite terminal of the TV receiver set 20.

For example, a VTR (video tape recorder) using a cassette tape medium is connected to the component terminal.

In the TV receiver set 20, the AV equipment can be identified by address information given by a code of predetermined figures (e.g., "1000" for the AV amplifier 10) as information unique to each of the equipments, and controlled individually.

The "address information" is a value that is set unique to respective equipments and never overlaps with each other. The "address information" is called a physical address or a logical address.

The "physical address" is assigned to the AV amplifier 10 and the HDD video recording device 13 by the TV receiver set 20. Also, the physical address is assigned to the AV equipments 11, 12 by the AV amplifier 10. The physical address of the TV receiver set 20 is stored in advance in the TV receiver set 20. The physical address is assigned to other equipments except the TV receiver set 20 in starting the system or in connecting the HDMI cables 31, 32, 33.

The "logical address" is the code that each equipment stores in advance.

The logical address is transmitted and received between the equipment that offers the physical address and the equipment that accepts the physical address when the physical address is attached. That is, respective equipments can store the logical addresses of other equipments.

The TV receiver set 20 is the equipment that receives the digital broadcasting, for example, and some is equipped with a display unit 22 and the other is equipped only with the transmitter/ receiver unit without the display unit 22. In this example, explanation will be made by referring to the TV receiver set 20 equipped with the display unit 22.

The TV receiver set 20 of the embodiment includes the display unit 22, a tuner unit 24 connected to an antenna (not shown), HDMI terminals 26a, 26b, an input unit 28, a controlling unit 41, a power supply managing unit 42, a standby switch 43, a video I/O unit 44, a memory 45, a determination unit 46, and the like. In this example, two HDMI terminals 26a, 26b are provided, but the AV equipment can be further connected when the HDMI selector, or the like is connected to these terminals.

The display unit 22 is a display device provided with a liquid crystal display panel, for example, and displays the video source received from the AV amplifier 10, the DVD player 11, the STB 12, and the HDD video recording device 13.

As shown in FIG.3, an operation setting screen 22a used to set the operation corresponding to the received standby command can be displayed on the display unit 22.

The display unit 22 serves as an output unit that outputs the video from the equipment being set as the output target among the external devices connected to the HDMI terminals 26a, 26b.

The tuner unit 24 is the unit that receives the broadcasting signal such as a cable television, a satellite broadcasting, a television broadcasting (digital broadcasting, analog broadcasting), an IP broadcasting (broadband VOD, or the like), and the like.

The HDMI terminals 26a, 26b are terminals that digitally transmit the video signal, the sound signal, and various control signals (commands containing the standby command) via one cable.

The AV amplifier 10 is connected to the HDMI terminal 26a via a HDMI cable 30. The HDD video recording apparatus 13 connected to the HDMI terminal 26b via a HDMI cable 33.

The input unit 28 is provided with a touch panel device, a group of push buttons, a keyboard, or other input devices.

The input unit 28 includes a receiver (e.g., infrared receiver) that receives a command from a remote controller (not shown) with the buttons equivalent to the above.

The input unit 28 displays the operation setting screen 22a (see FIG.3) using a graphic user interface display (referred to as a "GUI display" hereinafter) on the display unit 22.

The input unit 28 sends contents of the operation setting input into the operation setting screen 22a to the controlling unit 41. The controlling unit 41 registers the received contents of the operation setting in an operation setting table 451 (see FIG.2) of the memory 45 or updates the information already set in the table.

The user can execute the inputting operation to set the operation from the operation setting screen 22a of the display unit 22 in FIG.3. Thus, the user can execute the operation setting to decide whether or not the TV receiver set 20 should take an action in response to the standby command when it receives the standby command from the AV amplifier 10, the DVD player 11, the STB 12, or the HDD video recording device 13.

Also, the user can select the equipment as the destination of output of the video source displayed on the display unit 22 from the operation setting screen 22a, and set such equipment.

As the "equipment as the destination of output of the video source", in addition to the tuner unit 24, the AV amplifier 10, the DVD player 11, the STB 12, and the HDD video recording apparatus 13 in this equipment, equipments connected to the composite terminal (not shown) and the component terminal (not shown) may be listed.

The power supply managing unit 42 is connected to commercial power supply. The power supply managing unit 42 is controlled by the controlling unit 41 to switch ON/OFF of the standby switch 43.

The standby switch 43 is switched when this switch is turned ON/OFF by a power supply switch (not shown) and when the standby command is received.

The video I/O unit 44 (video interface) has an address communication unit 44a, an active source changing switch 44b, and a standby command receiving unit 44c.

The video I/O unit 44 receives the standby command, the address information, and the video source from the AV amplifier 10, the DVD player 11, the STB 12, and the HDD video recording device 13 via the HDMI terminals 26a, 26b.

The video I/O unit 44 outputs the standby command, the address information, and the video source being received to the controlling unit 41.

The address communication unit 44a sends the physical address to the AV amplifier 10 and the HDD video recording device 13. The address communication unit 44a transmits/receives the logical address to/from from the AV amplifier 10, the DVD player 11, the STB 12, and the HDD video recording device 13.

The active source changing switch 44b is controlled by the controlling unit 41, and switches the equipment that outputs the video and the sound to the display unit 22, out of the AV amplifier 10, the DVD player 11, the STB 12, and the HDD video recording device 13 connected to the HDMI terminals 26a, 26b.

That is, the equipment that is switched by the active source changing switch 44b to output the video source acts as the active source. The "active source" signifies the equipment that outputs the video source whose video is displayed on the display unit 22.

In this case, not only the AV amplifier 10, the DVD player 11, the STB 12, and the HDD video recording device 13 but also the tuner unit 24 and the equipments connected to the composite terminal and the component terminal serve as the active source as the target to be switched.

The standby command receiving unit 44c receives the standby command input from the HDMI terminals 26a, 26b.

A first standby information storing unit 45a, a second standby information storing unit 45b, and an active source storing unit 45c are provided to the memory 45.

Standby command disregarding information indicating whether or not the standby command should be disregarded at all times when the standby command is input from the HDMI terminals 26a, 26b is set in the first standby information storing unit 45a.

Information (AV equipment name, code, or the like) unique to the equipment that is outputting the video now out of the AV equipments connected to the HDMI terminals is set in the active source storing unit 45c as the active source.

Information indicating whether or not the standby command received from the AV equipments that are not set as the active source should be disregarded is set in the second standby information storing unit 45b.

An example in which the first standby information storing unit 45a, the second standby information storing unit 45b, the active source storing unit 45c, and the like are put into an operation setting table 451 is shown hereunder (see FIG.2).

As shown in FIG.2, the operation setting table 451 is a table in which active source information and operation information are set every AV equipment connected to the HDMI terminals 26a, 26b. The operation information is the information indicating a behavior of the controlling unit 41 (how to operate) in response to the received standby command.

In this example, for example, a code "1000" is set in the column of the AV equipment name column, "Yes" is set in the active source information column, and this AV equipment is set as the active source.

The operation information has items such as "disregarded at all times", "disregarded except the active source", "operated at all times", and the like. A numerical value indicating "1" (executed) or "0" (not executed), a flag corresponding to this value, or the like is set in respective items by the user's registering operation. In this case, "1" is set in the "disregarded at all times" item as the default setting of the operation setting table 451.

The physical address attached to the AV amplifier 10 and the HDD video recording apparatus 13, the logical address for the TV receiver set 20, and the logical address sent from the AV amplifier 10, the DVD player 11, the STB 12, and the HDD video recording apparatus 13 are stored in the memory 45.

The determination unit 46 serves as a first determination unit for searching the first standby information storing unit 45a (the operation setting table 451) by using the equipment unique information (AV equipment name, code, or the like) that is extracted from the standby command being input from the AV equipment via the HDMI terminals 26a, 26b, and deciding whether or not the standby command should be disregarded at all times. The determination unit 46 determines whether to disregard every standby commands by referring to the first command disregarding information (the operation setting table 451) stored in the first standby information storing unit 45a.

'As a result of determination made by the first determination unit, when it is decided that the standby command should not be disregarded at all times, the determination unit 46 serves as a second determination unit for deciding whether or not the standby command is received from the active source, by deciding whether or not the equipment unique information (AV equipment name, code, or the like) is set in the active source storing unit 45c (the operation setting table 451) as the active source.

As a result of determination made by the second determination unit, when it is decided that the standby command is not received from the active source, the determination unit 46 serves as a third determination unit for deciding whether or not the standby command received from the AV equipment being not set as the active source should be disregarded by referring to the second standby information storing unit 45b (the operation setting table 451).

That is, the determination unit 46 determines whether or not a standby operation should be executed in response to the received standby command, based on the logical address contained in the standby command received from the standby command receiving unit 44c and the information in the operation setting table 451 stored in the memory 45.

The controlling unit 41 performs video display on the display unit 22, switching of the equipments that outputs the video source to be displayed, control of respective portions in answer to the command input from the input unit 28, determination concerning whether or not the standby operation should be executed in answer to the standby command, control applied to shift respective portions in the equipment to the standby state, and the like.

The controlling unit 41 controls the power supply managing unit 42, the standby switch 43, the video I/O unit 44, the memory 45, and the determination unit 46. A power supply switch (not shown) is connected to the controlling unit 41. The controlling unit 41 controls the power supply managing unit 42 based on the ON/OFF operation of the power supply switch to supply or stop an electric power to the overall TV receiver set 20.

As the result of determination made by the determination unit 46, when it is decided that the standby command is received from the active source or when it is decided that the standby command is not received from the active source and the standby commands sent from the sources other than the active source should not disregarded, the controlling unit 41 serves as a control unit for controlling respective portions (IC for a main power supply to respective units, the memory 45, the circuit or IC chip for reproducing the video and audio, the display circuit and the backlight in the display unit 22, and the like) in the equipment to shift their operation functions to the standby state. A minimum backup power required to hold the stored contents is supplied to the memory 45.

In the TV receiver set 20 as configured as above, the video sources being output from the AV amplifier 10, the DVD player 11, the STB 12, and the HDD video recording apparatus 13 are output to the display unit 22. Thus, the user can view the video of program contents displayed on the display unit 22.

The TV receiver set 20 can display not only the video source fed from the AV amplifier 10, the DVD player 11, the STB 12, and the HDD video recording apparatus 13 but also the video source provided from the broadcasting signal received by the tuner unit 24.

In the TV receiver set 20, the user can input a desired setting into the input unit to decide whether or not the operation function should be shifted to the standby state in response to the standby command input from the external device.

The "setting" may be any one of the follows:

A. "disregarded at all times" (that is, the function is never brought into the standby state)

B. "disregarded except the active source"

C. "operated at all times" (that is, the standby command can be accepted from either of the AV amplifier 10, the DVD player 11, the STB 12, and the HDD video recording apparatus 13)

Next, the AV amplifier 10, the DVD player 11, the STB 12, and the HDD video recording apparatus 13 will be explained.

The AV amplifier 10, the DVD player 11, the STB 12, and the HDD video recording apparatus 13 can send out the standby command to the TV receiver set 20 when the power supply switch of each equipment is turned OFF.

The logical address of the source of transmission, the logical address of the destination of transmission, and the standby command are contained in this "standby command". The standby command is given as code information composed of the alphanumeric such as "0X64", for example.

These AV equipments have a function unique to each of these equipments and a function of transmitting/receiving the information to/from the TV receiver set 20.

The AV amplifier 10 has a function of outputting the information sent out from the DVD player 11 and the STB 12 to the TV receiver set 20. The AV amplifier 10 has a function capable of establishing a surrounding sound environment, such as 5.1 channel or 6.1 channel, when a plurality of speakers (not shown) are connected.

The AV amplifier 10 has a function of attaching the physical address to the DVD player 11 and the STB 12.

The DVD player 11 has a function of reading the video source from the optical disk, such as CD and DVD, and playing the audio and video recorded therein.

The STB 12 is also called as a home terminal. The STB 12 has a tuner for the broadcasting signal, an antenna connected to this tuner, and a converter unit. The STB 12 has a function of converting the received broadcasting signal into the audible signal at the TV receiver set 20.

The HDD video recording apparatus 13 has a function of receiving the video data from the TV receiver set 20 and recording the video.

The function of transmitting/receiving the information to/from the TV receiver set 20 is substantially common to respective equipments. Thus, explanation will be made by taking the AV amplifier 10 as an example, and detailed explanation of other AV equipments will be omitted herein.

The AV amplifier 10 can transmit the video source for two equipments to the TV receiver set 20 via one HDMI cable 31.

The AV amplifier 10 has HDMI terminals 10a, 10b 10c, an video I/O unit 10d, a memory 10e, and a controller 10f. The HDMI cables 30, 31, 32 are connected to the HDMI terminals 10a, 10b, 10c respectively.

The video I/O unit 10d transmits/receives the address information, the standby command, the video source sent out from the AV equipments 11, 12, and the like to/from the TV receiver set 20 via the HDMI terminal 10a.

The video I/O unit 10d transmits/receives the address information (the logical address or the physical address), the standby command, and the video source to/from the AV equipments 11, 12 via the HDMI terminals 10b, 10c.

The logical address and the physical address attached to the AV equipments 11, 12 are stored in advance in the memory 10e. Also, the physical address attached from the TV receiver set 20 is stored in the memory 10e.

The controller 10f is connected to a power supply switch (not shown). The controller 10f controls the supply/stop of the power for the information transmitting/ receiving unit 10d and the memory 10e in response to the ON/OFF operation of the power supply switch.

The controller 10f controls the video I/O unit 10d in stopping the supply of the power (i.e., in turning OFF the power supply switch) to cause it to transmit the standby command to the TV receiver set 20.

In the AV network system 1 configured as above, transmission/reception, reproduction, recording, etc. of the video source are performed.

The "video source" may be a video image produced by compressing/recording the TV program (data in a MPEG 2 and MPEG 4 format, and other formats), the broadcasting signal such as the cable television, the satellite broadcasting, the television broadcasting (digital broadcasting, analog broadcasting), the IP broadcasting (broadband VOD, or the like), the signal converted into the audible signal at the TV receiver set 20, and the like, for example.

The "video source" may be the digital signal reproduced from the optical disk such as the home CV, the DVD, and the like, for example. Music piece data downloaded from the music distributing service provided on the Internet (MP3, AAC, etc.), and the like may be contained in the digital signal.

Next, a method of changing the execution conditions of the standby command will be explained with reference to FIG. 3 hereunder. FIG.3 is a view showing an example of the operation setting screen displayed on the display unit.

As shown in FIG.3, the input unit 28 causes the display unit 22 to display the operation setting screen 22a when the user operates the input unit 28 of the TV receiver set 20 to display the operation setting screen.

The user changes the execution condition of the standby command via the operation setting screen 22a displayed on the display unit 22.

The operation setting screen 22a is displayed in response to the screen displaying operation from the input unit 28. An equipment name displaying portion 22b as the column in which the AV equipment name connected at present is displayed and an operation setting column 22c in which the operation to respond to the standby command is set are provided to the operation setting screen 22a.

The operation setting screen 22a is provided to enable the user to check the AV amplifier 10, the DVD player 11, the STB 12, and the HDD video recording apparatus 13 that are connected to the TV receiver set 20. The logical addresses of the AV amplifier 10, the DVD player 11, the STB 12, and the HDD video recording apparatus 13 are displayed on the operation setting screen 22a.

In addition, the physical address may be displayed on the operation setting screen 22a. Also, the equipment names of the AV amplifier 10, the DVD player 11, the STB 12, and the HDD video recording apparatus 13 are displayed on the equipment name displaying portion 22b. In this case, "AV amp", "DVD player", "STB", and "HDD recording apparatus" are displayed.

The equipment name information are received together with the logical addresses from the AV amp 10 (1000), the DVD player 11 (1100), the STB 12 (1200), and the HDD video recording apparatus 13 (2000).

In this case, the logical address and the equipment name are stored in the memory 45 of the TV receiver set 20 to have their correlation.

Alternately, respective equipment names and the code numbers corresponding to the equipment names may be stored previously in the memory 45, and then the code corresponding to the equipment name may be transmitted in transmitting the logical address.

The operation statuses registered to indicate how the controlling unit 41 operates in response to the standby command are displayed on the operation setting column 22c. The user can register and change the operation statuses freely by operating the button of the input unit 28.

When the user changes the operation statuses, for example, when the user presses predetermined buttons (the "go" button, the "return" button, etc.) of the input unit 28, the data is input adequately into the item such as "disregarded at all times", "disregarded except the active source", "operated at all times", and the like on the display of the operation setting column 22c. Therefore, when the user presses the "OK" button after the inputting operation, the contents of the operation status can be registered in the operation setting table 451.

Also, the operation statuses may be displayed in the pull-down menu style, and the user may decide any condition from this menu by the pointing operation of the button of the input unit 28.

In this case, the controlling unit 41 rewrites the data in the operation setting table 451 of the memory 45 based on the pointing operation of the button.

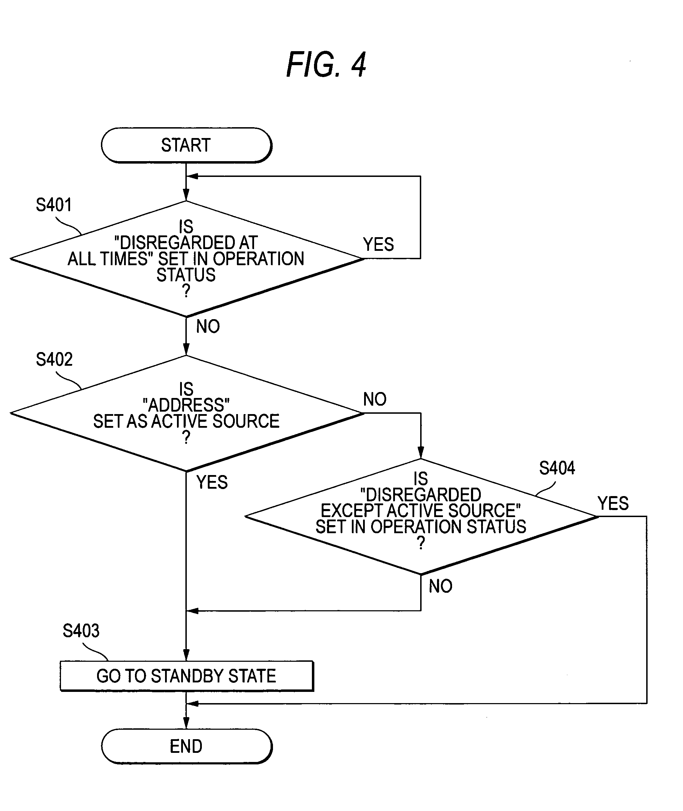

Next, an operation of the AV network system will be explained with reference to FIG.4 hereunder. FIG.4 is a flowchart showing an operation of the TV receiver set 20. In this case, following operations will be performed on the assumption that the logical addresses of the AV amplifier 10, the DVD player 11, the STB 12, and the HDD video recording apparatus 13 are received in advance by the TV receiver set 20 and stored in the memory 45.

It is assumed that the conditions responding to the standby command, i.e., the operation statuses in the operation setting table 451 have already been set on the operation setting screen 22a by the user.

In this state, when the standby command is transmitted to the TV receiver set 20 from either of the AV amplifier 10, the DVD player 11, the STB 12, and the HDD video recording apparatus 13, the controlling unit 41 causes the determination unit 46 to decide how the standby operation should be taken in response to the standby command.

The determination unit 46 reads the active source information and the operation information of the concerned equipment from the operation setting table 451 of the memory 45 by using the equipment code contained in the standby command as a key, and makes a determination in accordance with the read setting.

First, the determination unit 46 determines whether or not the operation status should be "disregarded at all times", based on the set contents of the read operation information (step S401 in FIG.4).

Then, if the determination unit 46 determines that the operation status should be "disregarded at all times" (Yes in step S401), the controlling unit 41 does not respond to the input standby command and waits for the input of the next command or instruction.

If the determination unit 46 does not decide that the operation status should be "disregarded at all times" (No in step S401), the controlling unit 41 transfers the logical address attached to the standby command to the determination unit 46. The determination unit 46 searches the operation setting table 451 by using the received logical address, and determines whether or not the address of that equipment is set as the active source ("YES" or not)(step S402).

As a result of this determination, if the address of that equipment is set as the active source (Yes in step S402), the determination unit 46 notifies the controlling unit 41 of that effect.

The controlling unit 41, when receives a notification from the determination unit 46, controls the power supply managing unit 42 to turn OFF the standby switch 43. That is, the controlling unit 41 controls respective functions of the equipment to go to the standby state (step S403).

In contrast, as a result of a determination made by the determination unit 46 as to whether or not the address is set as the active source (a determination result in step S402), if the address is not set as the active source (No in step S402), the determination unit 46 notifies the controlling unit 41 of that effect.

The controlling unit 41, when receives a notification from the determination unit 46, determines whether or not the standby command from the source except the active source should be disregarded, based on the setting of the read operation information in the item "disregarded except the active source" (step S404).

As a result of this determination, if the determination unit 46 determines that the standby command from the source except the active source should be disregarded (Yes in step S404), the controlling unit 41 does not respond to the input standby command and waits for the input of the next command or instruction.

Also, as a result of that determination, if the determination unit 46 determines that the standby command from the source except the active source should not be disregarded (No in step S404), the controlling unit 41 controls the power supply managing unit 42 to turn OFF the standby switch 43. That is, the controlling unit 41 controls respective functions of the equipment to go to the standby state (step S403).

In this manner, according to the AV network system 1 of the present embodiment, when the standby command is input from the equipment other than the active source that is just now outputting the video to the display unit 22, i.e. that the user is viewing, out of the AV equipments being connected to the TV receiver set 20, such standby command is disregarded. Therefore, such a situation can be prevented that, even when the user does not wish the standby state, the TV receiver set 20 goes automatically to its standby state and the video and audio that the viewer enjoys now disappear.

Also, the internal operations (whether or not respective functions of the equipment should go to the standby state) of the TV receiver set 20 responding to the standby commands from individual AV equipments connected to the HDMI terminals 26a, 26b are displayed on the operation setting screen 22a, on which the user can register the conditions, by the operation of the input unit 28. Therefore, the user can set the shifting conditions of the TV receiver set 20 to the standby state to meet the user's taste.

Here, the present invention is not limited only to the above embodiment. In the above embodiment, the operation statuses of the standby command are set to "disregarded at all times", "disregarded except the active source" and "operated at all times". But the operation statuses are not restricted to these conditions. Any conditions may be set if at least "disregarded except the active source" can be contained.

Also, the operation statuses of the standby condition, which are restricted to individual equipments of the AV amplifier 10, the DVD player 11, the STB 12, and the HDD video recording apparatus 13, can be set. In this case, "disregarded at all times", "disregarded except the active source", "operated at all times", "disregarded except the active source and the AV equipment 13", and "disregarded except the AV equipment 13", for example, are set as the operation statuses.

Also, respective AV equipments can output the standby command to the AV equipments except the TV receiver set 20. This function can performed by attaching the logical address or the physical address of other AV equipment as the destination information of transmission to the standby command.

For example, when the user turns OFF the power switch of the DVD player 11 as the active source, the AV equipment 13 and the TV receiver set 20 can be brought automatically into the standby state. Thus, the user can omit the action to press the power switches of individual equipments.

As described with reference to the embodiment, there is provided an digital video apparatus and a method for controlling the digital video apparatus that are capable of preventing a situation that the digital video apparatus is automatically brought into a standby state by the standby command output from one of the external devices connected to the digital video apparatus.

## Claims

1. A digital video apparatus comprising:
a plurality of HDMI terminals to which at least one of external devices is connected;
a first standby information storing unit that stores first standby command disregarding information indicating whether to disregard every standby commands input through the HDMI terminals;
an active source storing unit that stores active source information indicating whether unique information of one of the external devices from which a video is currently received is set as an active source;
a second standby information storing unit that stores second standby command disregarding information indicating whether to disregard a standby command received from any of the external devices that are not set as the active source;
a first determination unit that determines, when a received standby command is received from one of the external devices through the HDMI terminals, whether to disregard every standby commands by referring to the first standby command disregarding information;
a second determination unit that determines, when not determined that every standby commands should be disregarded by the first determination unit, whether the received standby command is received from the active source by determining whether a received unique information, which is included in the received standby command, is set as the active source by referring to the active source information;
a third determination unit that determines, when not determined that the received standby command is received from the active source, whether to disregard the received standby command by determining whether to disregard the received standby command by referring to the second standby command disregarding information; and
a control unit that controls operational functions of the digital video apparatus to transition into a standby state when (1) determined that the received standby command is received from the active source, or (2) determined to disregard the received standby command should be disregarded by the third determination unit.

2. The apparatus according to claim 1 further comprising a setting unit that allows a user to configure the first standby command disregarding information and the second standby command disregarding information.

3. The apparatus according to claim 1 further comprising a storage that stores a table that indicates the first standby command disregarding information, the second standby command disregarding information, and the active source information.

4. The apparatus according to claim 1 further comprising a display device that displays the video received through one of the HDMI terminals from one of the external devices which is set as the active source

5. A method for controlling a digital video apparatus that is provided with a plurality of HDMI terminals to which at least one of external devices is connected, the method comprising:
storing first standby command disregarding information that indicates whether to disregard every standby commands input through the HDMI terminals;
storing active source information that indicates whether unique information of one of the external devices from which a video is currently received is set as an active source;
storing unit second standby command disregarding information that indicates whether to disregard a standby command received from any of the external devices that are not set as the active source;
determining, when a received standby command is received from one of the external devices through the HDMI terminals, whether to disregard every standby commands by referring to the first standby command disregarding information;
determining, when not determined that every standby commands should be disregarded by the first determination unit, whether the received standby command is received from the active source by determining whether a received unique information, which is included in the received standby command, is set as the active source by referring to the active source information;
determining, when not determined that the received standby command is received from the active source, whether to disregard the received standby command by determining whether to disregard the received standby command by referring to the second standby command disregarding information; and
controlling operational functions of the digital video apparatus to transition into a standby state when (1) determined that the received standby command is received from the active source, or (2) determined to disregard the received standby command should be disregarded by the third determination unit.

6. The method according to claim 5 further comprising allowing a user to configure the first standby command disregarding information and the second standby command disregarding information.

7. The method according to claim 5 further comprising storing a table that indicates the first standby command disregarding information, the second standby command disregarding information, and the active source information.

8. The method according to claim 5 further comprising displaying the video received through one of the HDMI terminals from one of the external devices which is set as the active source
